# EUROPEAN PATENT SPECIFICATION

(11) **EP 2 196 381 B1**
(45) Date of publication and mention of the grant of the patent: **30.03.2011**
(21) Application number: 08425793.0
(22) Date of filing: 15.12.2008
(51) Int. Cl.: B62D 25/08

(54) **Motor-vehicle structure having a front module constituted by elements made of plastic and/or composite material**
Kraftfahrzeugstruktur mit einem Frontend-Modul mit Bestandteilen aus Kunststoff und/oder Komposit- Material
Structure de véhicule automobile avec façade avant modulaire comportant des éléments constitutifs en matériau plastique et/ou composite

(43) Date of publication of application: 16.06.2010
(73) Proprietor: C.R.F. Società Consortile per Azioni, 10043 Orbassano (Torino) (IT)
(72) Inventor: Iammarino, Michele, 10043 Orbassano (Torino) (IT); Masia, Augusto, 10043 Orbassano (Torino) (IT); Castaldi, Michele, 10043 Orbassano (Torino) (IT)
(74) Representative: Notaro, Giancarlo

(56) References cited:
- EP-A- 0 919 452
- EP-A- 1 281 603
- JP-A- 8 230 724
- US-A1- 2005 218 645

## Description

The present invention relates to motor-vehicle structures, for example for commercial vehicles, vans, buses or the like, of the type comprising a metal frame including a pair of longitudinal members connected by cross members and a metal cab body mounted on the frame and including a pair of longitudinal sub-cab members supported on the longitudinal members of the frame by means of elastic supports that enable relative movements in a vertical direction of the body with respect to the frame. An example of the prior art is shown in JP8230724

The object of the present invention is to provide a motor-vehicle structure of the type referred to above provided with a front module constituted by elements made of plastic and/or composite material, which will have a reduced number of components, will be particularly light, and will guarantee good characteristics both from the standpoint of resistance to impact and from the standpoint of ease and rapidity of assembly.

With a view to achieving the above purpose, the subject of the invention is a motor-vehicle structure having the characteristics indicated in Claim 1.

Further preferred and advantageous characteristics of the invention are indicated in the dependent claims, which form an integral part of the present description.

The subject of the invention is also a method for assembly of a motor-vehicle structure of the type specified above, having the characteristics specified in Claim 12.

The invention will now be described with reference to the annexed drawings, which are provided purely by way of non-limiting example and in which:
Figure 1 is a schematic perspective view of an example of motor-vehicle structure according to the invention;
Figure 2 is a partial perspective view of the front module forming part of the motor-vehicle structure of Figure 1;
Figure 3 is an exploded perspective view of the front module of Figure 2;
Figure 4 is a perspective view of the longitudinal members forming part of the frame of the motor vehicle, of the longitudinal sub-cab members forming part of the body mounted on the frame and of a component of the front module constituting a bottom front cross-member element;
Figure 5 is a schematic lateral cross-sectional view of the assembly of Figure 4;
Figure 6 is a further partially sectioned perspective view of part of the frame of the motor vehicle, of part of the body of the cab, and of part of the front module;
Figure 7 is a side view of the assembly of Figure 6;
Figures 8-16 illustrate the component parts the front module;
Figure 17 is a schematic lateral cross-sectional view of the front module according to the invention;
Figure 18 illustrates a variant of Figure 17; and
Figure 19 illustrates the various steps of the composition of the front module forming part of the motor-vehicle structure according to the invention.

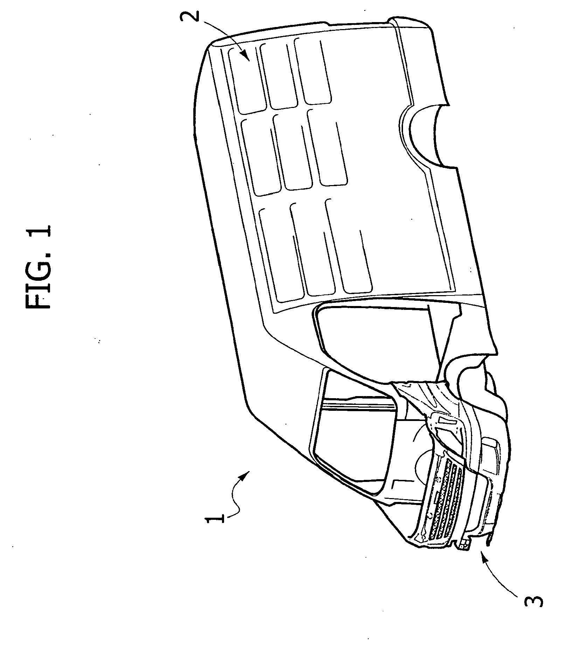

In Figure 1, the reference number 1 designates as a whole a structure of a motor vehicle, in the specific case a van, comprising a cab body 2 consisting of elements made of sheet metal welded together, and a front module 3 constituted by elements made of plastic and/or composite material.

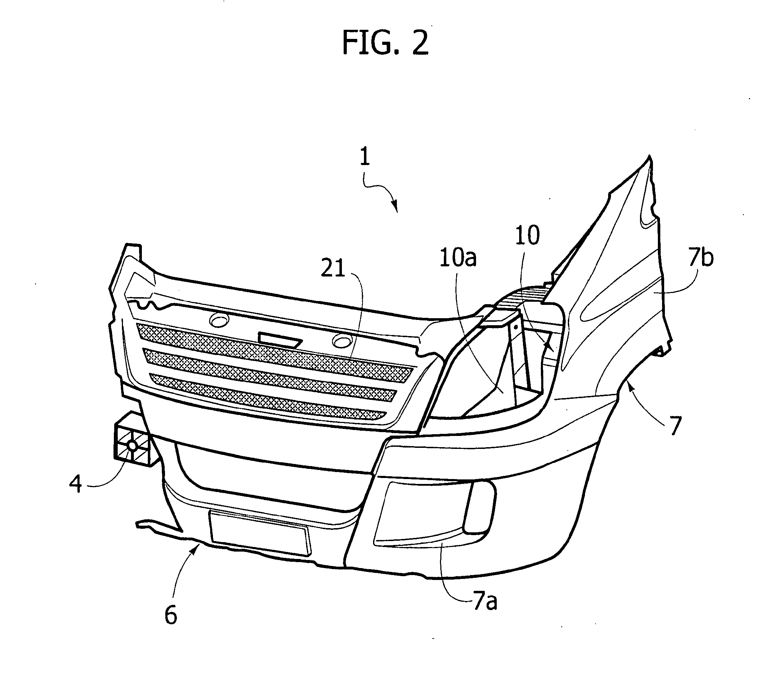

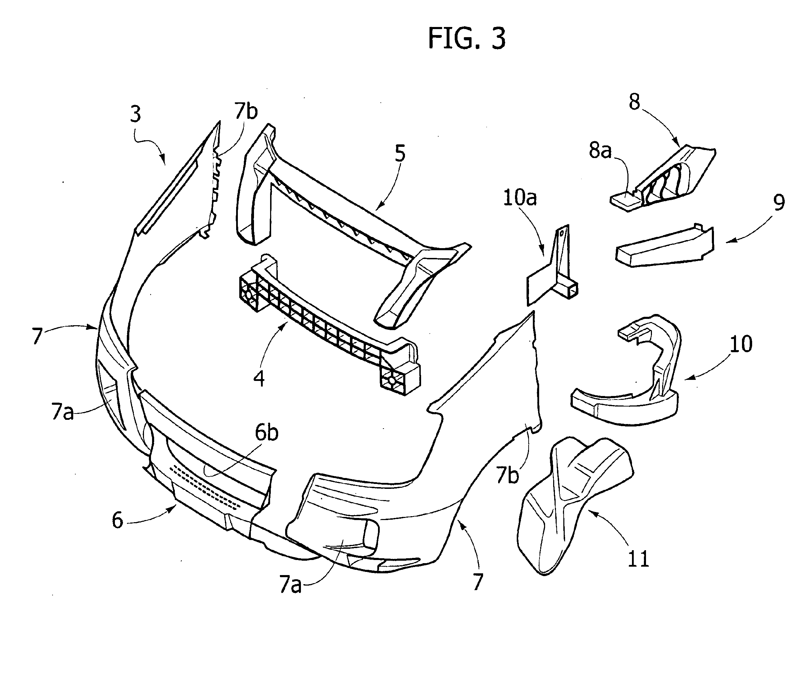

Figure 2 is a partial perspective view of the front module 3. The parts that make up the module 3 may be clearly seen in Figure 3 in an exploded condition. They include a bottom front cross-member element 4, a top front cross-member element 5, a central bumper portion 6, two side portions 7, incorporating end portions 7a of the bumper, and front portions 7b of the sides of the bodywork, three pairs of side supports 8, 9, 10a (Figure 3 illustrates only the set of three left-hand supports 8, 9, 10a), two frames 10 for the front sets of lights of the motor-vehicle (Figure 3 shows only the left-hand frame 10) and two wheelhouse elements 11 (Figure 3 illustrates only the left-hand element 11). As has been mentioned, all the elements 4-11 constituting the front module 3 are made of plastic and/or composite material. Their function and the way in which they are connected together and to the remaining part of the structure of the motor-vehicle will be illustrated in detail in what follows.

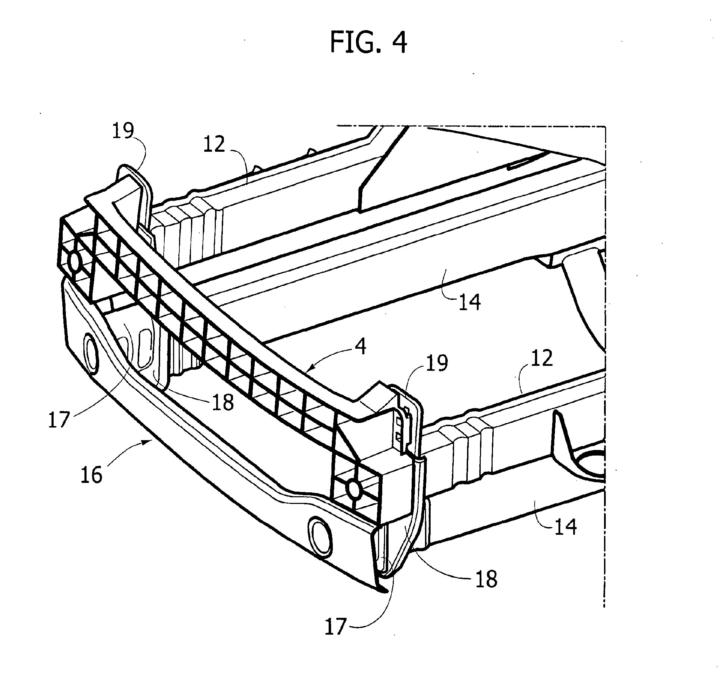

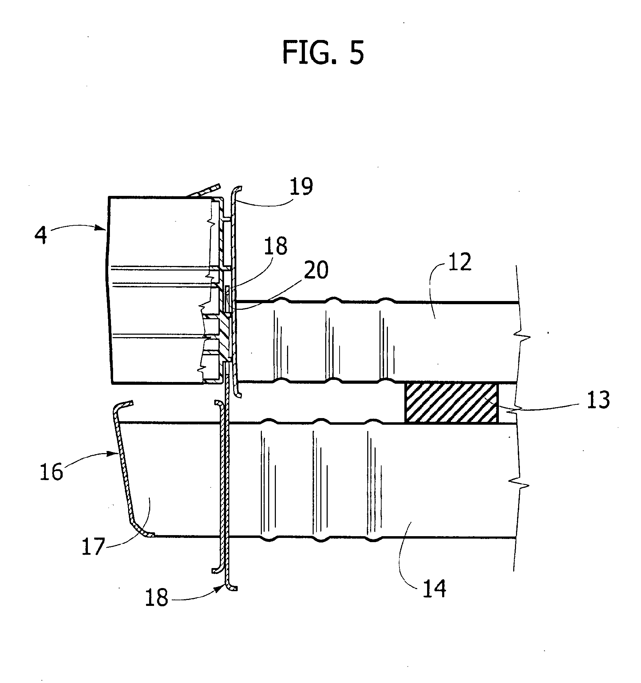

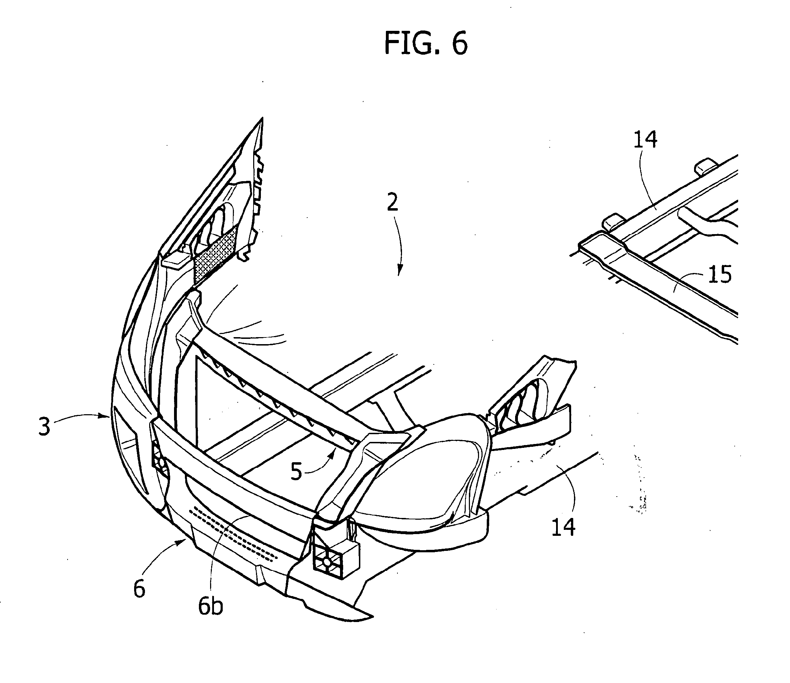

With reference to Figures 4 and 5, the body of the cab of the motor-vehicle, made of sheet metal, includes two longitudinal sub-cab members 12, which rest, with the interposition of elastic supports 13 (Figure 5), on the traditional longitudinal members 14 forming part of the metal frame of the motor vehicle. According to the traditional technique, the two longitudinal members 14 are joined together by a plurality of cross members (see, for example, the cross member 15 in Figure 6).

With reference once again to Figures 4 and 5, fixed to the front ends of the two longitudinal members 14 of the frame of the motor vehicle is a front metal cross member 16, for absorption of any front impact. The cross member 16 is connected to the front ends of the longitudinal members 14 by means of box structures 17. Moreover fixed in a position corresponding to the front end of the longitudinal members 14 are two main front plates 18. The plates 18 extend upwards above the longitudinal members 14 and are set facing two respective auxiliary plates 19, which are in turn fixed to the front ends of the two longitudinal sub-cab members 12 (see also Figure 5).

With reference also to Figure 3, the front module includes a bottom cross-member element 4 having a ribbed structure made of a single piece of plastic and/or composite material, the ends of which are slotted at the front into the parts projecting at the top of the aforesaid auxiliary plates 19 and are moreover bolted to the longitudinal sub-cab member 12. The slotted coupling enables limitation of the moment transmitted to the cross-member element 4 due to the loads acting on the longitudinal member following upon impact. The main plates 18, where these face the auxiliary plates 19, have through openings 20 sufficiently wide as to prevent interference with parts fixed with respect to the cross-member element 4 or to the longitudinal members 12 during any relative movements in a vertical direction between the longitudinal members 12 and the longitudinal members 14.

The function of the main plates 18 and of the auxiliary plates 19 is to distribute the forces applied by the front cross member 16 following upon front impact between the longitudinal members 14 of the frame and the longitudinal sub-cab members 12 of the body.

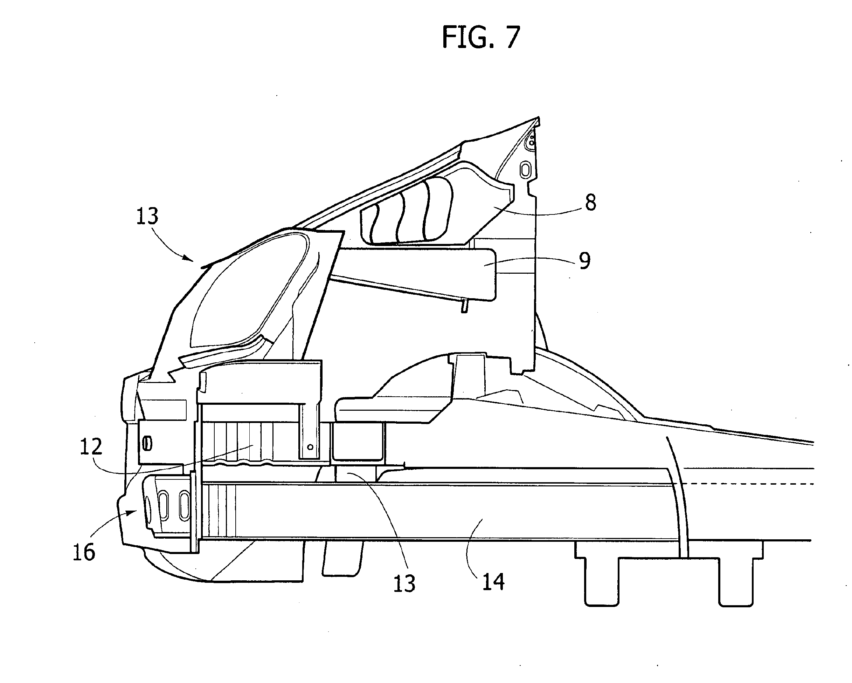

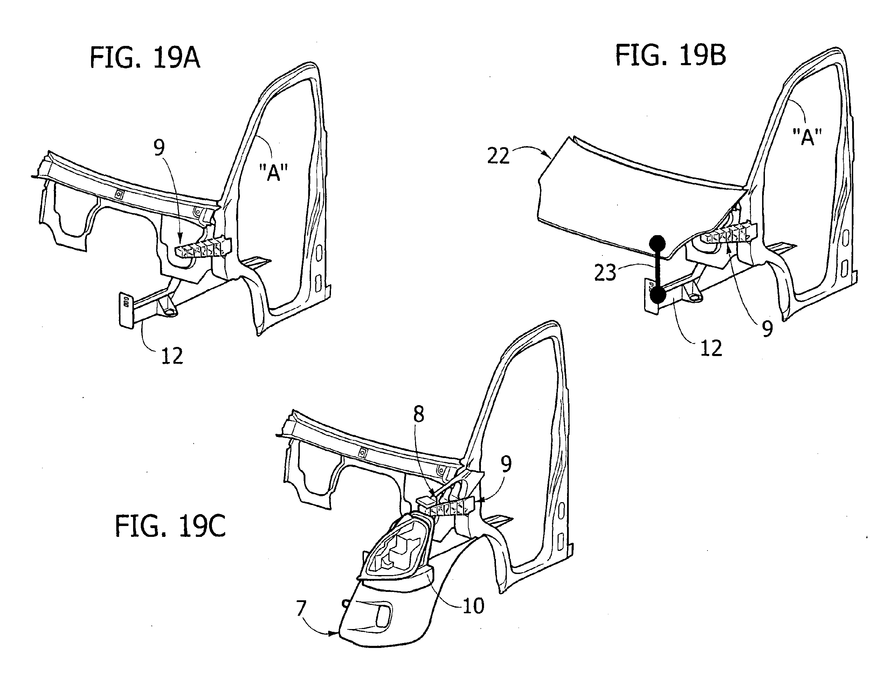

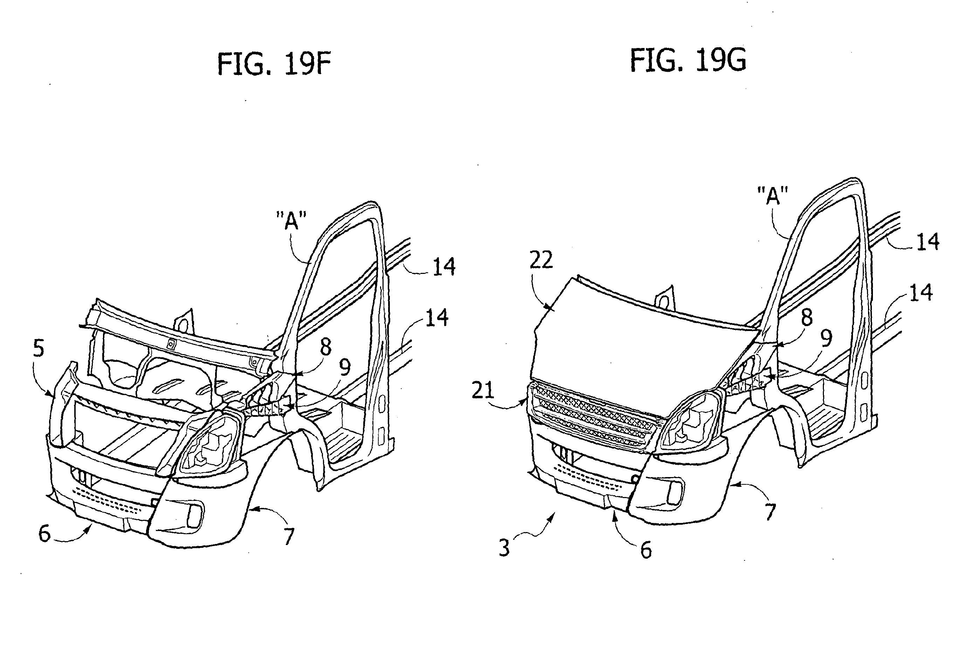

With reference also to Figures 6-16, the front module 3 is assembled by providing initially the two side supports 9 on the body of the motor vehicle. In particular, one end of each support 9 is fixed to the upright "A" of the respective side of the body, as illustrated in Figure 19A so as to extend in cantilever fashion forwards starting from said upright. Figures 19A *et seq.* Show, for reasons of clarity, only part of the body of the motor vehicle. As may be seen in Figure 19B, provisionally mounted on the structure thus prearranged is the bonnet 22 with the aid of a positioning tool 23 (illustrated schematically in Figure 19B). In said condition, the entire body is subjected to a painting bath, after which further components of the front module are mounted. In particular, as may be seen in Figure 19B, mounted on each side support 9 is the respective side support 8. With reference to Figure 3, each side support 8 has a front end with a resting surface 8a mounted on which is the respective frame 10 of the set of lights. The bottom part of said frame is left free to bend in order to prevent it from possibly constituting an obstacle to absorption of the energy of impact by means of collapse of the longitudinal member. Next, a respective side support 10a is mounted on the support 8 and on the frame 10 and is then used in turn as rest for the respective side portion 7, which also rests on the respective longitudinal sub-cab member 12.

In the present description and in the annexed drawings the means for mutual connection of the parts made of plastic and/or composite material that constitute the front module of the invention are not illustrated. It is evident that said means can be of any known type and can be constituted, for example, by gluing means, or else bolts, or else both.

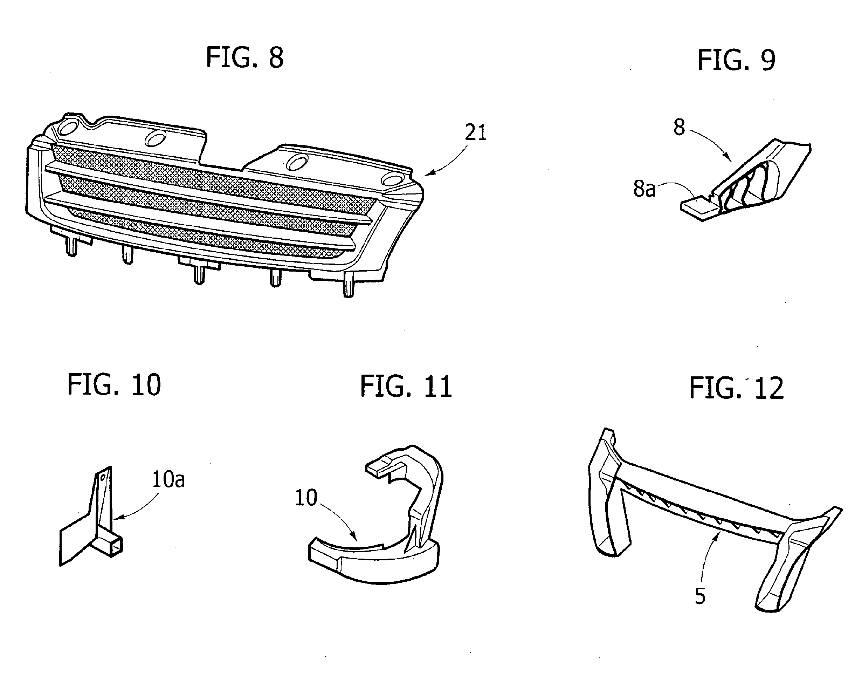

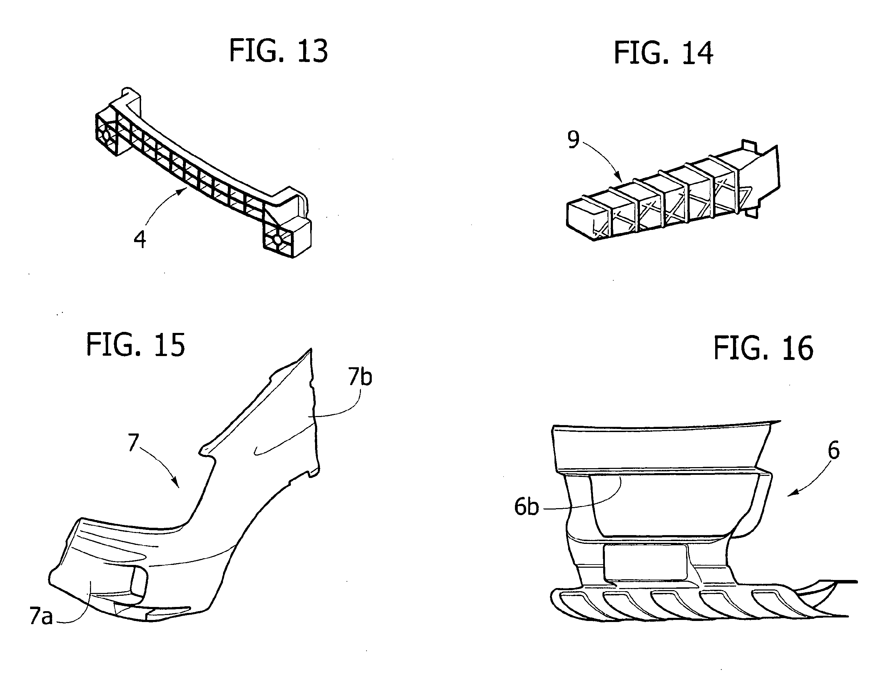

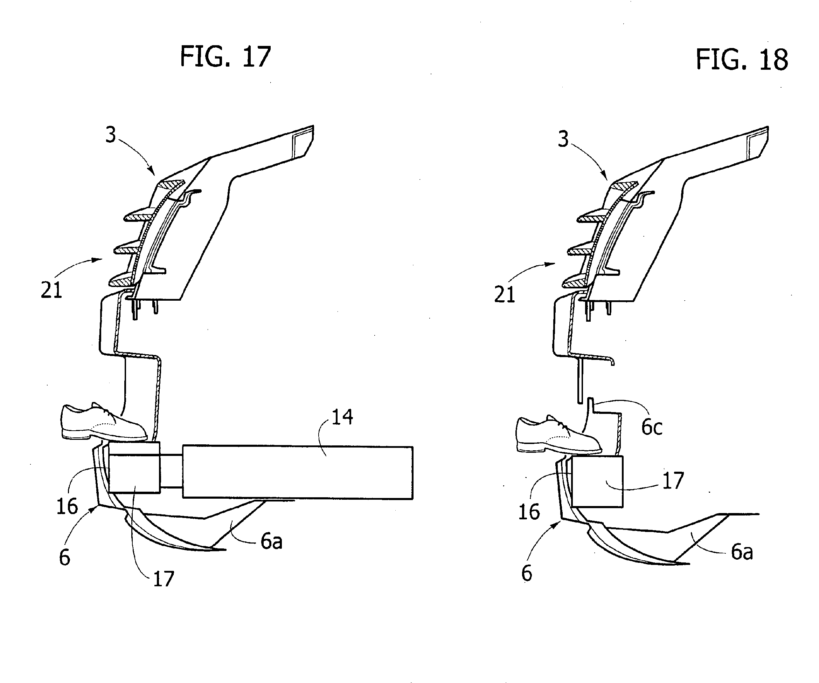

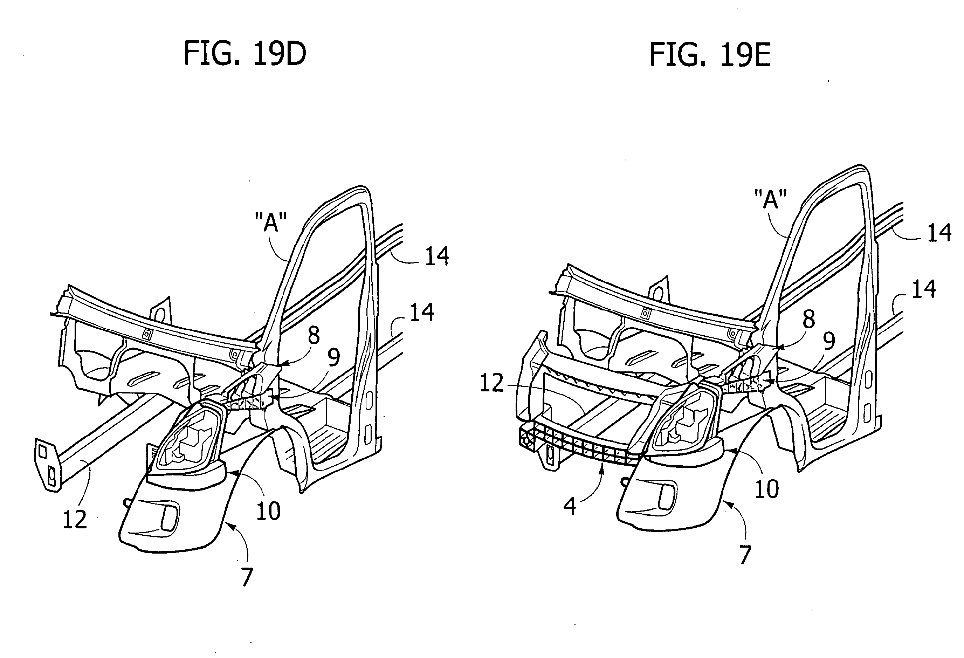

Once the elements 8, 9, 10, 10a, 7 have been installed, the painted body and thus completed is mounted on the metal frame, which includes the two longitudinal members 14 (Figure 19D). Once said coupling or marriage has been made, the front module is completed with the bottom front cross-member element 4, which is fixed in the way that has been described with reference to Figures 4 and 5 and, on top of it, with the top front cross-member element 5 (Figure 19E). Once said operation has been performed, the central portion of the bumpers 6 is then mounted by being fixed underneath the bottom cross-member element 4. As may be seen in Figure 17, said element has at its bottom end a flexible tab 6a, which is joined to the longitudinal members 14 and is deformed in the course of the relative movements between the body, to which it is fixed with respect to the central bumper element 6, and the frame including the longitudinal members 14. As may be clearly seen in Figure 16, the central bumper portion 6 has a front window 6b, which enables access to the front cross member 16 (Figure 4), which has been described above. As illustrated schematically in Figure 17, said arrangement enables an operator to rest his feet on the cross member 16 when he has to climb up to gain conveniently access to the top front part of the motor-vehicle in order to carry out maintenance operations. In the final step of assembly (Figure 19G) there is finally mounted the front grill, which is not visible in Figure 3, but is illustrated in itself in Figure 8, and which is here designated by the reference number 21.

Figure 18 illustrates a variant in which the central bumper portion 6 is mounted on the front cross member 16, in which case the front grill 21 has a bottom edge 21a that sets itself at the front and at a distance with respect to the top edge 6c of the central bumper portion 6, to enable relative displacements of said elements during the vertical movements of the body with respect to the frame.

Thanks to the characteristics described above, the front module 3, constituted only by elements made of plastic and/or composite material, is characterized by a very small number of components (fifteen in the example illustrated), for a considerable reduction of weight with respect to the solutions with front part made of sheet metal, and also enables a greater reliability of the structure as regards the relative movements between the body and the frame. As has been seen, the front module is devised also for facilitating the operations of assembly, with particular reference to the possibility of gaining access easily to the top front part of the motor vehicle. The parts made of plastic with hollow section can also advantageously be used for integrating therein pipes and service cables associated to the engine of the motor vehicle. The operations of assembly of the motor-vehicle are thus rationalized and simplified.

Of course, without prejudice to the principle of the invention, the details of construction and the embodiments may vary widely with respect to what is described and illustrated purely by way of example, without this implying any departure from the scope of the present invention.

## Claims

1. A motor-vehicle structure comprising:
- a metal frame, including a pair of longitudinal members (14) connected by cross members (15);
- a metal cab body (2) mounted on the frame (14), including a pair of longitudinal sub-cab members (12) supported on the longitudinal members (14) of the frame by means of elastic supports (13) that enable relative movements in a vertical direction of the body (2) with respect to the frame (14);
- a front metal cross member (16) for absorption of impact, fixed to the front ends of the two longitudinal members (14) of the frame; **characterized in** comprising furthermore:
- a main front metal plate (18) connected to the front end of each longitudinal frame member (14), facing a respective auxiliary front metal plate (19) connected to the front end of a respective longitudinal sub-cab member (12), to distribute the forces applied by the aforesaid front cross member (16) between the longitudinal members of the frame (14) and the longitudinal sub-cab members (12); and
- a front subassembly or module made up of elements made of plastic and/or composite material, fixed to the cab body (2) and defining the front part of the bodywork of the motor vehicle.

2. The motor-vehicle structure according to Claim 1, **characterized in that** said front module includes a bottom front cross-member element (4) constituted by a single piece made of plastic and/or composite material, the ends of which are fixed at the front to the aforesaid auxiliary front plates (19).

3. The motor-vehicle structure according to Claim 2, **characterized in that** the aforesaid main front plates (18) have openings (18a), through which the ends of the aforesaid bottom cross-member element (4) are fixed to the aforesaid auxiliary plates (19), said openings having a sufficient width to prevent any interference following upon the relative vertical movements between the cab body (2) and the longitudinal frame members (14).

4. The motor-vehicle structure according to Claim 2, **characterized in that** said front module moreover comprises a top front cross-member element (5), mounted on said bottom front cross-member element (4).

5. The motor-vehicle structure according to Claim 2, **characterized in that** said front module comprises a central bumper portion (6) made of plastic and/or composite material and fixed under the bottom cross-member element (4).

6. The motor-vehicle structure according to Claim 1, **characterized in that** said front module includes two side portions (7), each of which defines a front bumper end portion (7a) and a front side portion of the bodywork of the motor-vehicle (7b).

7. The motor-vehicle structure according to Claim 6, **characterized in that** each of said side portions (7) is supported at the rear via one or more supports (8, 9,10a) by the uprights "A" of the cab body of the motor vehicle.

8. The motor-vehicle structure according to Claim 7, **characterized in that** said supports include a bottom support (9), fixed in cantilever fashion to the upright "A" of the cab body, and a top support (8), mounted on the bottom support (9).

9. The motor-vehicle structure according to Claim 8, **characterized in that** said top support (8) has a front end (8a) for resting of a peripheral frame (10) made of plastic for a respective front set of lights of the motor vehicle.

10. The motor-vehicle structure according to Claim 9, **characterized in that** it comprises two auxiliary supports (10a) each of which is carried by a respective top support (8) and by a respective frame for a set of lights (10) and in turn supports the respective side portion (7) of the front module (3).

11. The motor-vehicle structure according to Claim 10, **characterized in that** said front module moreover comprises two wheelhouse elements (11).

12. A method for assembly of a motor-vehicle structure according to any one of the preceding claims, **characterized in that** the cab body (2) is subjected to painting, after which the aforesaid front module is assembled thereon by means of successive assembly of the components made of plastic and/or composite material that constitute it, said cab body being coupled to the frame (14) of the motor vehicle in an intermediate step of the operations of assembly of the various components constituting the front module.

13. The method according to Claim 12, **characterized in that** coupling of the cab body (2) to the frame (14) of the motor-vehicle is performed after the aforesaid side portions (7) have been mounted with the corresponding supporting elements (8, 9, 10a) and prior to mounting of the aforesaid bottom and top front cross-member elements, of the aforesaid central bumper portion (6) and of the aforesaid front grill (21).

## Patentansprüche

1. Kraftfahrzeugstruktur, enthaltend:
- einen Metallrahmen, der zwei Längselemente (14) enthält, die mit Querelementen (15) verbunden sind;
- einen Metallkabinenkörper (2), der an dem Rahmen (14) angebracht ist und zwei Längsteilkabinenelemente (12) enthält, die an den Längselementen (14) des Rahmens mit Hilfe elastischer Halterungen (13) gehalten sind, die Relativbewegungen des Körpers (2) in einer vertikalen Richtung im Bezug auf den Rahmen (14) ermöglichen;
- ein vorderes Metallquerelement (16) für die Absorption eines Aufpralls, das an den vorderen Enden der beiden Längselemente (14) des Rahmens befestigt ist;
**dadurch gekennzeichnet, dass** sie weiterhin enthält:
- eine Metallfronthauptplatte (18), die mit dem vorderen Ende jedes Längsrahmenelementes (14) verbunden ist und einer entsprechenden Zusatzfrontmetallplatte (19) zugewandt ist, die mit dem vorderen Ende eines entsprechenden Längsteilkabinenelementes (12) verbunden ist, um die Kräfte zu verteilen, die durch das zuvor erwähnte vordere Querelement (16) zwischen den Längselementen des Rahmens (14) und den Längsteilkabinenelementen (12) wirken; und
- eine Frontanordnung oder ein Frontmodul, die/das aus Elementen aufgebaut ist, die aus Kunststoff und/oder einem Kompositmaterial bestehen, und an dem Kabinenkörper (2) befestigt ist und den vorderen Teil der Karosserie des Kraftfahrzeugs bildet.

2. Kraftfahrzeugstruktur nach Anspruch 1, **dadurch gekennzeichnet, dass** das Frontmodul ein unteres vorderes Querelement (4) enthält, das aus einem einzigen Stück aus Kunststoff und/oder einem Kompositmaterial besteht und dessen Enden an der Vorderseite mit den zuvor erwähnten Zusatzfrontplatten (19) verbunden sind.

3. Kraftfahrzeugstruktur nach Anspruch 3, **dadurch gekennzeichnet, dass** die zuvor erwähnten Hauptfrontplatten (18) Öffnungen (18a) haben, durch die die Enden des zuvor Erwähnten unteren Querelementes (4) an den zuvor erwähnten Zusatzplatten (19) befestigt sind, wobei die Öffnungen eine ausreichende Breite haben, um eine Berührung infolge der vertikalen Bewegungen zwischen dem Kabinenkörper (2) und den Längsrahmenelementen (14) zu verhindern.

4. Kraftfahrzeugstruktur nach Anspruch 2, **dadurch gekennzeichnet, dass** das Frontmodul darüber hinaus ein oberes vorderes Querelement (5) enthält, das an dem unteren vorderen Querelement (4) angebracht ist.

5. Kraftfahrzeugstruktur nach Anspruch 2, **dadurch gekennzeichnet, dass** das Frontmodul einen zentralen Stoßstangenabschnitt (6) enthält, der aus Kunststoff und/oder einem Kompositmaterial besteht und unter dem unteren Querelement (4) befestigt ist.

6. Kraftfahrzeugstruktur nach Anspruch 1, **dadurch gekennzeichnet, dass** das Frontmodul zwei Seitenabschnitte (7) enthält, die jeweils einen Frontstoßstangen-Endabschnitt (7a) und einen Frontseitenabschnitt der Karosserie des Kraftfahrzeuges (7b) definieren.

7. Kraftfahrzeugstruktur nach Anspruch 6, **dadurch gekennzeichnet, dass** jeder der Seitenabschnitte (7) an der Hinterseite mittels wenigstens einer Halterung (8, 9, 10a) durch die Säulen "A" des Kabinenkörpers des Kraftfahrzeugs gehalten ist.

8. Kraftfahrzeugstruktur nach Anspruch 7, **dadurch gekennzeichnet, dass** die Halterungen eine untere Halterung (9), die kragarmartig an der Säule "A" der Kabine befestigt ist, und eine obere Halterung (8) enthalten, die an der unteren Halterung (9) angebracht ist.

9. Kraftfahrzeugstruktur nach Anspruch 8, **dadurch gekennzeichnet, dass** die obere Halterung (8) ein vorderes Ende (8a) für die Aufnahme eines Umfangsrahmens (10) aus Kunststoff für einen entsprechenden vorderen Scheinwerfersatz des Kraftfahrzeugs hat.

10. Kraftfahrzeugstruktur nach Anspruch 9, **dadurch gekennzeichnet, dass** sie zwei Zusatzhalterungen (10a) enthält, die jeweils von einer entsprechenden oberen Halterung (8) und einem entsprechenden Rahmen für einen Scheinwerfersatz (10) gehalten sind, der seinerseits den jeweiligen Seitenabschnitt (7) des Frontmoduls (3) hält.

11. Kraftfahrzeugstruktur nach Anspruch 10, **dadurch gekennzeichnet, dass** das Frontmodul darüber hinaus zwei Radkastenelemente (11) enthält.

12. Verfahren zum Montieren einer Kraftfahrzeugstruktur nach einem der vorhergehenden Ansprüche, **dadurch gekennzeichnet, dass** der Kabinenkörper (2) lackiert wird, worauf das zuvor erwähnte Frontmodul mit Hilfe einer nachfolgenden Montage der Teile aus Kunststoff und/oder einem Kompositmaterial, aus denen es besteht, daran angebracht wird, wobei der Kabinenkörper mit dem Rahmen (14) des Kraftfahrzeuges in einem Zwischenschritt der Montagevorgänge der unterschiedlichen Bauteile gekoppelt wird, die das Frontmodul bilden.

13. Verfahren nach Anspruch 12, **dadurch gekennzeichnet, dass** das Koppeln des Kabinenkörpers (2) mit dem Rahmen (14) des Kraftfahrzeugs ausgeführt wird, nachdem die zuvor erwähnten Seitenabschnitte (7) mit den entsprechenden Halteelementen (8, 9, 10a) angebracht wurden und bevor die zuvor erwähnten unteren und oberen vorderen Querelemente des zuvor erwähnten zentralen Stoßstangenabschnittes (6) und des zuvor erwähnten Frontgrills (21) angebracht werden.

## Revendications

1. Structure de véhicule à moteur comprenant :
un châssis métallique comprenant une paire d'éléments longitudinaux (14) raccordés par des traverses (15) ;
un corps de cabine métallique (2) monté sur le châssis (14), comprenant une paire d'éléments longitudinaux de sous-cabine (12) supportés sur les éléments longitudinaux (14) du châssis au moyen de supports élastiques (13) qui permettent des mouvements relatifs dans une direction verticale du corps (2) par rapport au châssis (14) ;
une traverse métallique avant (16) pour l'absorption des chocs, fixée sur les extrémités avant des deux éléments longitudinaux (14) du châssis ;
**caractérisée en ce qu'**elle comprend en outre :
une plaque métallique avant principale (18) raccordée à l'extrémité avant de chaque élément longitudinal de châssis (14), faisant face à une plaque métallique avant auxiliaire (19) respective raccordée à l'extrémité avant d'un élément longitudinal de sous-cabine (12) respectif, afin de répartir les forces appliquées par la traverse avant (16) mentionnée précédemment entre les éléments longitudinaux du châssis (14) et les éléments longitudinaux de sous-cabine (12); et
un sous-ensemble ou module avant composé d'éléments réalisés à partir de matière plastique et/ou composite, fixé sur le corps de cabine (2) et définissant la partie avant de la carrosserie du véhicule à moteur.

2. Structure de véhicule à moteur selon la revendication 1, **caractérisée en ce que** ledit module avant comprend un élément avant de traverse inférieur (4) constitué par une seule pièce en matière plastique et/ou composite, dont les extrémités sont fixées à l'avant, sur les plaques avant auxiliaires (19) mentionnées précédemment.

3. Structure de véhicule à moteur selon la revendication 2, **caractérisée en ce que** les plaques avant principales (18) mentionnées précédemment ont des ouvertures (18a) à travers lesquelles les extrémités de l'élément de traverse inférieur (4) mentionnées précédemment sont fixées sur les plaques auxiliaires (19) mentionnées précédemment, lesdites ouvertures ayant une largeur suffisante pour empêcher toute interférence suite aux mouvements verticaux relatifs entre le corps de cabine (2) et les éléments longitudinaux de châssis (14).

4. Structure de véhicule à moteur selon la revendication 2, **caractérisée en ce que** ledit module avant comprend de plus un élément avant de traverse supérieur (5) monté sur ledit élément avant de traverse inférieur (4).

5. Structure de véhicule à moteur selon la revendication 2, **caractérisée en ce que** ledit module avant comprend une partie centrale de pare-chocs (6) réalisée avec une matière plastique et/ou composite et fixée sous l'élément de traverse inférieur (4).

6. Structure de véhicule à moteur selon la revendication 1, **caractérisée en ce que** ledit module avant comprend deux parties latérales (7), dont chacune définit une partie d'extrémité de pare-chocs avant (7a) et une partie latérale avant de la carrosserie du véhicule à moteur (7b).

7. Structure de véhicule à moteur selon la revendication 6, **caractérisée en ce que** chacune desdites parties latérales (7) est supportée à l'arrière via un ou plusieurs supports (8, 9, 10a) par les montants « A » du corps de cabine du véhicule à moteur.

8. Structure de véhicule à moteur selon la revendication 7, **caractérisée en ce que** lesdits supports comprennent un support inférieur (9) fixé en porte-à-faux sur le montant « A » du corps de cabine, et un support supérieur (8) monté sur le support inférieur (9).

9. Structure de véhicule à moteur selon la revendication 8, **caractérisée en ce que** ledit support supérieur (8) a une extrémité avant (8a) pour l'appui d'un châssis périphérique (10) réalisé à partir de plastique pour un ensemble avant respectif de phares du véhicule à moteur.

10. Structure de véhicule à moteur selon la revendication 9, **caractérisée en ce qu'**elle comprend deux supports auxiliaires (10a), dont chacun est supporté par un support supérieur (8) respectif et par un châssis respectif pour un ensemble de phares (10) et supporte à son tour la partie latérale (7) respective du module avant (3).

11. Structure de véhicule à moteur selon la revendication 10, **caractérisée en ce que** ledit module avant comprend de plus deux éléments de passage de roue (11).

12. Procédé pour assembler une structure de véhicule à moteur selon l'une quelconque des revendications précédentes, **caractérisé en ce que** le corps de cabine (2) est soumis à la peinture, après quoi le module avant mentionné précédemment est assemblé sur ce dernier au moyen de l'assemblage successif des composants réalisés à partir de matière plastique et/ou composite qui le constituent, ledit corps de cabine étant couplé au châssis (14) du véhicule à moteur lors d'une étape intermédiaire des opérations d'assemblage des différents composants constituant le module avant.

13. Procédé selon la revendication 12, **caractérisé en ce que** le couplage du corps de cabine (2) sur le châssis (14) du véhicule à moteur est réalisé après que les parties latérales (7) mentionnées précédemment ont été montées avec les éléments de support (8, 9, 10a) correspondants et avant le montage des éléments avant de traverse inférieur et supérieur mentionnés précédemment, de la partie centrale de pare-chocs (6) mentionnée précédemment et de la grille avant (21) mentionnée précédemment.
